# EUROPEAN PATENT SPECIFICATION

(11) **EP 1 699 300 B1**
(45) Date of publication and mention of the grant of the patent: **05.09.2007**
(21) Application number: 03819225.8
(22) Date of filing: 31.12.2003
(51) Int. Cl.: A23L 1/164

(54) **CEREAL BAR FORMULATION AND PROCESS THEREFOR**
GETREIDERIEGELZUSAMMENSETZUNG UND VERFAHREN IHRER HERSTELLUNG
FORMULATION D'UNE BARRE DE CEREALES ET PROCEDE ASSOCIE

(43) Date of publication of application: 13.09.2006
(73) Proprietor: Council of Scientific and Industrial Research, New Delhi 110 001, Maharashtra (IN)
(72) Inventor: RAMAKRISHNA, Chetana, Mysore 570 013, Karnataka (IN); REDDY, Yella, Reddy, Sunki, Mysore 570 013, Karnataka (IN)
(74) Representative: Fairbairn, Angus Chisholm
(86) International application number: PCT/IN2003/000474
(87) International publication number: WO 2005/063047

(56) References cited:
- EP-A- 0 586 138
- US-A- 4 605 561
- DATABASE WPI Section Ch, Week 200380 Derwent Publications Ltd., London, GB; Class D13, AN 2003-862673 XP002296839 & CN 1 378 790 A (COUNCIL SCI & IND RES) 13 November 2002 (2002-11-13)

## Description

### Field of the invention

The present invention relates to a cereal bar formulation and a process for preparation thereof.

### Background of the invention

Cereal bars are known by several different names including energy bars, granola bars, food bars, meal replacement bars, and the like. Due to the potential usefulness of cereal based products as high energy and protein snack foods, they are of great interest in providing quick energy or sustained energy. Energy bars are used by body builders, athletes or as a post workout snack or to reduce hunger between meals. Fortified with proteins vitamins, dehydrated fruits and nuts, they are capable of being vehicles for supplying nutraceuticals.

Snack foods have been known in India from time immemorial. All over the world, several ready to eat cereal products are prepared conventionally by puffing or expanding cereals. Puffed rice is extensively used in the preparation of various products in most parts of South Asia. Puffed paddy, unlike puffed rice is not crisp, but more chewy and used in the preparation of savory.

Reference is made to cereal bar and method of making (US 6,607,760 (2003); CA 2,366,666 (2000); AU 762,391 (2003); WO 0056171 (2000); PL 349,892 (2002), wherein a ready-to-eat cereal bar containing an extruded mixture of agglomerated particles or flakes of at least one cooked extruded base made up of amylaceous materials and milk solids and a binder made up of sugar, milk solids and a binding agent, wherein the extruded mixture has the shape of a bar. The process consists of mixing the dry mixture with binder and forming. The drawbacks of this invention are amylaceous materials, milk solids and gums are used as binding agents in addition to sugars. The process consists of extrusion and forming into bar.

Reference is made to process for manufacture of molded food (Murata et al., USP 5,091,201, 1992), wherein process for producing molded food, with corn and wheat flakes, binded with pre-gelatinized cereal powder containing alcohol or powdery polymer to mold into shape. The drawbacks of this invention are pre-gelatinized starch is used as a binder by wetting followed by drying.

Reference is made to nutritional athletic bar (Michnowski, US 4,832,971, 1989), wherein high protein, vitamin and mineral fortified nutritionally balanced snack comprising corn syrup, confectioner's coating, a wetting agent, vitamin and mineral premix at least one high carbohydrate source and at least one high protein source are mixed and shaped by extruding and the temperature does not exceed about 82°C. The drawbacks of this invention are dry mixing of the ingredients, wherein temperature does not exceed 82°C and shaping by extruding.

Reference is made to granola bar with supplemented dietary fiber and method (Linscott, US 4,871,557, 1989,), wherein a granola bar with supplemented dietary fiber in the form of compressed flakes is added and the method includes mixing of ingredients selected from grains, fruits, and nuts, fiber is mixed and then extruded. The drawbacks of this invention are compressed flakes of dietary fiber are made by mixing with a binder and water, heated, extruded and dried. The flakes are incorporated into the other ingredients and extruded.

Reference is made to reduced calorie granola bars (Kayes, J.E., and Savicke K.W, EP0348196, 1989), wherein food products such as granola bars, popcorn balls, nut clusters and the like are prepared in which food pieces are held together by a binder, which contains reduced calorie fat substitute, preferably sucrose fatty acid esters. The drawbacks of this invention are the binder consists of high proportion of fat substitute.

Reference is made to granola bar with supplementary dietary fiber and method (Linscott et. al, US 4,871,557, 1989), wherein granola bar with supplementary dietary fiber as compressed flakes is mixed with grains, fruits and gums and are combined with binder and then extruded and dried. The drawbacks of this invention are all the ingredients are mixed with little water and extruded and then dried to remove moisture.

Reference is made to a guar gum food bar (Michnewslei, US 4,496,606, 1985), wherein ready to eat dietetic composition is used for type II diabetics comprising of 50-75% carbohydrates, 10-15% protein, 8-15% fat and 8-12% guar gum. The drawbacks of the invention are the process consists of blending and extruding at low temperature and also consists of high concentration of gum.

Reference is made to food bar (Cook et al, US 4,451,488, 1984), wherein the bar having a soft chewy texture prepared using two polyhydric alcohols in varying ratios, with lower sugar content. The drawbacks of the present invention are polyols such as glycerol or propylene glycol are used with lower sugar content along with other added ingredients such as chocolate chips, vegetables, fruits, nuts, grains, etc., and the process includes dry blending at lower temperature and then compressing.

Reference is made to cereal fortified food bar (Hayward, et al., US 4,145,448, 1979), wherein production of bar comprising marshmallow with added cereal materials having a protein content of about 30% used by heating to gelatinize the starch and denature protein. The drawbacks of this invention are marshmallows prepared and heat treated cereals are folded into expanded marshmallow and allowed to set.

Reference is made to a food bar and process of preparing the same (Kelly, et al US 4,055,669, 1977), wherein the cereals are bound together with an edible solid adhesive food composition containing protein, edible fat and carbohydrate and the process of preparation is dry mixing, heating and passing through mill followed by reheating. The drawbacks of the present invention are high proportions of cereals and fat used and protein as one of the binding agents. Also, the process is by dry blending and heating, milling and reheating.

EP 586 138 discloses cereal bars comprising 5-20% rice crisp, 1-5% maltodextrin and 30% sugar.

### Objects of the invention

The main object of the invention is to provide a cereal bar formulation and a process for preparation thereof, which obviates drawbacks as detailed above.

Another object of the invention is to prepare binder to hold processed cereal products firmly and also to impart chewy texture to the product.

Another object of the invention is usage of ready to eat processed rice products like puffed and expanded rice as cereal base.

Yet another object of the invention is to use of appropriate modified starches to impart soft chewy texture, which retains after storage.

### Summary of the invention

Accordingly the present invention provides a cereal bar formulation:
a) Jaggery or sugar 30-50%;
b) Glucose syrup, 25-45%;
c) Fat, 0-15%;
d) Puffed and expanded rice products, 8-20%;
e) Modified starches, 0.5-5.0%;
f) Roasted peanuts, 0-15%;
g) Moisture, 5-12%.

The present invention also provides a process for the preparation of a cereal bar formulation comprising:
a) Jaggery or sugar 30-50%;
b) Glucose syrup, 25-45%;
c) Fat, 0-15%;
d) Puffed and expanded rice products, 8-20%;
e) Modified starches, 0.5-5.0%;
f) Roasted peanuts, 0-15%;
g) Moisture, 5-12%.
the process consisting of
a) dissolving sugar and glucose syrup in water by heating,
b) adding the fat,
c) preparing a slurry of modified starch by dispersing it in water and adding to sugar syrup,
d) heating the mixture to a temperature in the range of 108-120°C,
e) cooling the mixture to a temperature in the range of 80-100°C to obtain a syrup,
f) adding processed cereals in the form of pieces to the syrup and mixing thoroughly for a period in the range of 5-10 min,
g) further processing the mixture into desired shape.

In one embodiment of the invention the processed cereals are selected from puffed rice, expanded rice and any mixture thereof and are added in a ratio of 1:1 w/w.

In another embodiment of the invention, the puffed and expanded rice products are ground and sieved to a particle size having more that 30 mesh and less than 16 mesh size particles.

In another embodiment of the invention, modified starches to impart desirable texture and its stability selected from waxy maize and maltodextrins.

In another embodiment of the invention, the modified starches are dispersed in twice their weight of water and incorporated in the mixture.

In yet another embodiment of the invention, the jaggery is taken in solid form or in the form of a syrup containing 75% by weight of semisolids.

In another embodiment of the invention, the glucose syrup used is of 40-42 DE grade.

### Brief description of the accompanying drawing

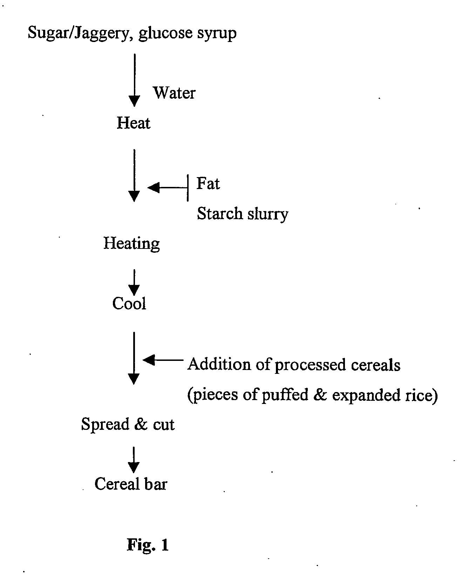

Figure 1 is a flow sheet of the process of the invention.

### Detailed description of the invention

The present invention provides a novel cereal bar formulation comprising Jaggery or sugar in an amount of 30-50%; Glucose syrup in an amount of 25-45%; Fat in an amount of 0-15%; Puffed and expanded rice products in an amount of 8-20%; Modified starches in an amount of 0.5-5.0%; Roasted peanuts in an amount of 0-15%; and Moisture in an amount of 5-12%, all percentages being expressed in terms of weight.

The present invention also provides a process for the preparation of a cereal bar formulation comprising .Jaggery or sugar in an amount of 30-50%; Glucose syrup in an amount of 25-45%; Fat in an amount of 0-15%; Puffed and expanded rice products in an amount of 8-20%; Modified starches in an amount of 0.5-5.0%; Roasted peanuts in an amount of 0-15%; and Moisture in an amount of 5-12%, all percentages being expressed in terms of weight. The process comprises dissolving the sugar or jaggery and glucose syrup in water by heating and adding the fat. A slurry is then prepared of the modified starch by dispersing it in water and this is then added to the sugar syrup. This mixture is then heated to a temperature preferably in the range of 108-120°C and then cooled to a temperature in the range of 80-100°C to obtain syrup.

Processed cereals are then added in the form of pieces to the syrup. The processed cereals comprise puffed and expanded rice products in the form of pieces. This mixture is thoroughly mixed for a period in the range of 5-10 min and then processed into the desired shape. For example, the mixture can be spread on a plate and then cut into the desired shape of a bar. The processed cereals are preferably added in a ratio of 1:1 w/w. The puffed and expanded rice products are ground and sieved to a particle size having more that 30 mesh and less than 16 mesh size particles. The two cereal products are used in the present invention to prepare chewy or crunchy cereal bar.

Modified starches to impart desirable texture and its stability selected from waxy maize and maltodextrins. The modified starches are dispersed in twice their weight of water and incorporated in the mixture. The jaggery can be taken in solid form or in the form of a syrup containing 75% soluble solids. The glucose syrup used is of 40-42 DE grade.

The sugars and the glucose syrup are dissolved in appropriate amount of water by heating, fat is added to the syrup; slurry of modified starches is prepared by dispersing requisite quantity of starch in water (for example 5 g in 10-20 ml water); heating the mixture to about 108-120°C; cooling to about 90°C and then adding cereals to the mixture, mixing the ingredients thoroughly so that all cereals are covered with binding syrup and then spreading on an oiled tray and cutting to obtain ready to eat cereal bar.

The present invention differs from prior art formulations since syrups are heated and then mixed with cereals and molded. Additionally the binder consists of sugars and a small amount of modified starches, which help to improve the texture and its stability.

The product is a stable, convenient and ready-to-eat sweet confection, which provides energy and nutrition and could be consumed as sweet or snack in between the meals. The pieces of cereals are held together by a binder, which consists of sugars (cane sugar or jaggery and glucose syrup), which are assisted by appropriate modified starches to impart soft, chewy, gummy product. The main binding sugar in the present invention is jaggery, which is nutritionally better than normal sugar, adds to the nutrition and extends the usage of jaggery. The proportion of sugar or jaggery to glucose syrup is selected to impart desirable texture and its stability and also the type of modified starch and its content influence the texture and its stability. These parameters are specified to obtain a shelf stable product with desired texture.

Hence, the present invention is directed to produce a cereal bar having adhesive properties effective for binding cereals to impart soft, chewy or crunchy texture, which is shelf-stable. The novelty of the process is selection of proper proportion of binding syrup to cereals; selection of appropriate modified starch and quantity and mixing starch slurry with sugar syrup and heating the mass to the desired temperature and mixing with cereals to get smooth, chewy texture with extended shelf-life.

The following examples are given by the way of illustration of the present invention and therefore should not be construed to limit the scope of the present invention.

### Example 1

44 g of solid Jaggery or 58 g of jaggery syrup of 75°B (75% soluble solids) is weighed into a pan and 44 g of glucose syrup and 40 ml water are added to it and warmed to dissolve sugars and then 10 g of fat (vanaspati) is added and the contents are heated to about 112°C. 5 g of maltodextrin is weighed into a beaker and is dispersed in 10 ml of water and this slurry is added to the sugar syrup and the mixture is heated to about 110°C. It is removed from fire, cooled and then added 13.5 g of a mixture consisting 1:1 w/w of puffed and expanded rice products and mixed thoroughly and is spread onto a greased plate and cut to obtain ready to eat soft and chewy cereal bar.

### Example 2

44 g of solid Jaggery or 58 g of jaggery syrup of 75°B (75% soluble solids) is weighed into a pan and 44 g of glucose syrup and 40 ml water are added to it and warmed to dissolve sugars and then 10 g of fat (vanaspati) is added and the contents are heated to about 110°C. 3 g of maltodextrin is weighed into a beaker and is dispersed in 10 ml of water and this slurry is added to the sugar syrup and the mixture is heated to about 110°C. It is removed from fire, cooled and then added 13.5 g of a mixture consisting 1:1 w/w of puffed and expanded rice products and mixed thoroughly and is spread onto a greased plate and cut to obtain ready to eat soft and chewy cereal bar.

### Example 3

Sugar, 44 g is weighed into a pan and 44 g of glucose syrup and 40 ml water are added to it and warmed to dissolve sugars and then 10 g of fat (vanaspati) is added and the contents are heated to about 112°C. 3 g of maltodextrin is weighed into a beaker and is dispersed in 10 ml of water and this slurry is added to the sugar syrup and the mixture is heated to about 110°C. It is removed from fire, cooled and then added 13.5 g of a mixture consisting 1:1 w/w of puffed and expanded rice products and mixed thoroughly and is spread onto a greased plate and cut to obtain ready to eat soft and chewy cereal bar.

### Example 4

Sugar, 44 g is weighed into a pan and 44 g of glucose syrup and 40 ml water are added to it and warmed to dissolve sugars and then 10 g of fat (vanaspati) is added and the contents are heated to about 112°C. 3 g of waxy maize starch is weighed into a beaker and is dispersed in 10 ml of water and this slurry is added to the sugar syrup and the mixture is heated to about 110°C. It is removed from fire, cooled and then added 13.5 g of a mixture consisting 1:1 w/w of puffed and expanded rice products and mixed thoroughly and is spread onto a greased plate and cut to obtain ready to eat soft and chewy cereal bar.

### Example 5

44 g of solid Jaggery or 58 g of jaggery syrup of 75°B (75% soluble solids) is weighed into a pan and 44 g of glucose syrup and 40 ml water are added to it and warmed to dissolve sugars and then 10 g of fat (vanaspati) is added and the contents are heated to about 112°C. 1 g of waxy maize starch is weighed into a beaker and is dispersed in 10 ml of water and this slurry is added to the sugar syrup and the mixture is heated to about 110°C. It is removed from fire, cooled and then added 13.5 g of a mixture consisting 1:1 w/w of puffed and expanded rice products and mixed thoroughly and is spread onto a greased plate and cut to obtain ready to eat soft and chewy cereal bar.

### Example 6

44 g of solid Jaggery or 58 g of jaggery syrup of 75°B (75% soluble solids) is weighed into a pan and 44 g of glucose syrup and 40 ml water are added to it and warmed to dissolve sugars and then 10 g of fat (vanaspati) is added and the contents are heated to about 112°C. 0.5 g of waxy maize starch is weighed into a beaker and is dispersed in 10 ml of water and this slurry is added to the sugar syrup and the mixture is heated to about 110°C. It is removed from fire, cooled and then added 13.5 g of a mixture consisting 1:1 w/w of puffed and expanded rice products and mixed thoroughly and is spread onto a greased plate and cut to obtain ready to eat soft and chewy cereal bar.

### Example 7

44 g of solid Jaggery or 58 g of jaggery syrup of 75°B (75% soluble solids) is weighed into a pan and 44 g of glucose syrup and 40 ml water are added to it and warmed to dissolve sugars and then 10 g of fat (vanaspati) is added and the contents are heated to about 120°C. 1 g of waxy maize starch is weighed into a beaker and is dispersed in 10 ml of water and this slurry is added to the sugar syrup and the mixture is heated to about 120°C. It is removed from fire, cooled and then added 20 g of puffed rice and mixed thoroughly and is spread onto a greased plate and cut to obtain ready to eat cereal bar.

### Analyses

### Texture measurement

The typical textural characteristics of cereal bars prepared with various sugars and modified starches are determined by texture measuring system, by compressing. Using the software, various characteristics like hardness, gumminess and chewiness are calculated.

**Table 1. Texture of cereal bars prepared with Jaggery using various modified starches**

| Product | Hardness (N) | Gumminess | Chewiness |
|---|---|---|---|
| Product with 3% MD | 293 | 87 | 97 |
| Product with 5% MD | 446 | 160 | 195 |
| Product with 1% waxy starch | 311 | 111 | 149 |
| Product with 3% waxy starch | 326 | 145 | 153 |

Results in Table 1 indicated that all textural characteristics increased as modified starch increased in the formulation. Thus, products having varied textural characteristics to suit different regions and personnel can be prepared by adjusting level and quality of modified starch in the formulations.

### Sensory evaluation:

The product is subjected to sensory evaluation with 15 trained panelists using 10 point headonic scale. The important attributes such as hardness, chewiness, mouthfeel, and overall quality are evaluated and the average values are reported.

**Table 2. Sensory evaluation of cereal bars**

| Product | Hardness | Stickiness | Chewiness | Overall quality |
|---|---|---|---|---|
| Product with 3% MD | 6.3 | 6.5 | 6.0 | 8.5 |
| -do- 5% MD | 10.0 | 6.4 | 8.0 | 6.0 |
| -do- 1% MD | 5.0 | 6.0 | 4.2 | 5.3 |
| -do- 3% waxy maize | 7.4 | 5.2 | 7.0 | 7.0 |

| | | | | |
|---|---|---|---|---|
| MD=maltodextrin | | | | |

The results in Table 2 revealed that the product prepared using maltodextrin at 3% level scored the highest overall quality followed by waxy maize at 3% and MD at 5% levels. Others also acceptable but comparatively they have lower sensory scores.

### The main advantages of the present invention are

The product is a ready to eat having extended shelf-life and convenient confection containing processed cereals and hence absorption and assimilation is fast. Also, jaggery which is nutritionally better (rich in minerals) than refined sugar, is used as main binder source. Also, the process of preparation is simple.

## Claims

1. A cereal bar formulation: comprising
a) Jaggery or sugar 30-50%;
b) Glucose syrup, 25-45%;
c) Fat, 0-15%;
d) Puffed and expanded rice products, 8-20%;
e) Modified starches, 0.5-5.0%;
f) Roasted peanuts, 0-15%;
g) Moisture, 5-12%
All percentages being expressed in terms of the final formulation.

2. A process for the preparation of a cereal bar formulation comprising:
a) Jaggery or sugar 30-50%;
b) Glucose syrup, 25-45%;
c) Fat, 0-15%;
d) Puffed and expanded rice products, 8-20%;
e) Modified starches, 0.5-5.0%;
f) Roasted peanuts, 0-15%;
g) Moisture, 5-12%.
the process consisting of
a) dissolving sugar and glucose syrup in water by heating,
h) adding the fat,
i) preparing a slurry of modified starch by dispersing it in water and adding to sugar syrup,
j) heating the mixture to a temperature in the range of 108-120°C,
k) cooling the mixture to a temperature in the range of 80-100°C to obtain a syrup, adding processed cereals in the form of pieces to the syrup,
l) adding puffed and expanded rice products in the form of pieces to the syrup and mixing thoroughly for a period in the range of 5-10 min,
m) further processing the mixture into desired shape.

3. A process as claimed in claim 2 wherein the processed cereals are selected from puffed rice, expanded rice and any mixture thereof and are added in a ratio of 1:1 w/w.

4. A process as claimed in claim 2 wherein the processed cereals are ground and sieved to a particle size having more that 30 mesh and less than 16 mesh size particles.

5. A process as claimed in claim 2 wherein the modified starches to impart desirable texture and its stability selected from waxy maize and maltodextrins.

6. A process as claimed in claim 2 wherein the modified starches are dispersed in twice their weight of water and incorporated in the mixture.

7. A process as claimed in claim 2 wherein the jaggeryis used as a solid or a syrup containing about 75% semisolids.

8. A process as claimed in claim 2 wherein the glucose syrup used is of 40-42 DE grade.

## Patentansprüche

1. Cerealienriegel-Formulierung, umfassend:
a) Jagrezucker (Jaggery) oder Zucker, 30-50 %;
b) Glucosesirup, 25-45 %;
c) Fett, 0-15 %;
d) Puffreis- und andere aufgeblähte Reisprodukte, 8-20 %;
e) modifizierte Stärken, 0,5-5,0 %;
f) geröstete Erdnüsse, 0-15 %;
g) Feuchtigkeit, 5-12 %,
wobei alle prozentualen Anteile bezogen auf die Endformulierung ausgedrückt sind.

2. Verfahren zur Herstellung einer Cerealienriegel-Formulierung, umfassend:
a) Jagrezucker oder Zucker, 30-50 %;
b) Glucosesirup, 25-45 %;
c) Fett, 0-15 %;
d) Puffreis- und andere aufgeblähte Reisprodukte, 8-20 %;
e) modifizierte Stärken, 0,5-5,0 %;
f) geröstete Erdnüsse, 0-15 %;
g) Feuchtigkeit, 5-12 %,
wobei das Verfahren aus Folgendem besteht:
a) Auflösen von Zucker und Glucosesirup in Wasser durch Erhitzen,
b) Zufügen des Fetts,
c) Herstellen einer Aufschlämmung aus modifizierter Stärke durch ihr Dispergieren in Wasser und ihr Zufügen zum Zuckersirup,
d) Erhitzen des Gemischs auf eine Temperatur im Bereich von 108-120 °C,
e) Abkühlen des Gemischs auf eine Temperatur im Bereich von 80-100 °C zum Erhalt eines Sirups, Zufügen von verarbeiteten Cerealien in der Form von Stücken zum Sirup,
f) Zufügen von Puffreis- und aufgeblähten Reisprodukten in der Form von Stücken zum Sirup und gründliches Mischen für eine Zeitdauer im Bereich von 5-10 min,
g) und weitere Verarbeitung des Gemischs in die gewünschte Form.

3. Verfahren nach Anspruch 2, worin die verarbeiteten Cerealien aus Puffreis, aufgeblähtem Reis und jedwedem Gemisch davon ausgewählt sind und in einem Gewichtsverhältnis von 1:1 1 zugefügt werden.

4. Verfahren nach Anspruch 2, worin die verarbeiteten Cerealien gemahlen und auf eine Partikelgröße von mehr als 30 mesh und eine Partikelgröße von weniger als 16 mesh gesiebt werden.

5. Verfahren nach Anspruch 2, worin die modifizierten Stärken zum Verleihen der gewünschten Textur und ihrer Stabilität aus Wachsmais und Maltodextrinen ausgewählt werden.

6. Verfahren nach Anspruch 2, worin die modifizierten Stärken im Zweifachen ihres Gewichts an Wasser dispergiert und in das Gemisch inkorporiert werden.

7. Verfahren nach Anspruch 2, worin der als ein Feststoff oder ein Sirup verwendete Jagriszucker ca. 75 % Halbfeststoffe enthält.

8. Verfahren nach Anspruch 2, worin der verwendete Glucosesirup einen DE-Wert von 40-42 aufweist.

## Revendications

1. Formulation d'une barre de céréales comprenant:
a) 30 à 50% de sucre jaggery ou de sucre;
b) 25 à 45% de sirop de glucose;
c) 0 à 15% de matière grasse;
d) 8 à 20% de produits à base de riz soufflé et expansé;
e) 0,5 à 5,0% d'amidons modifiés;
f) 0 à 15% de cacahouètes grillées;
g) 5 à 12% d'humidité;
tous les pourcentages étant exprimés en fonction de la formulation finale.

2. Procédé de préparation de formulation d'une barre de céréales comprenant:
a) 30 à 50% de sucre jaggery ou de sucre;
b) 25 à 45% de sirop de glucose;
c) 0 à 15% de matière grasse;
d) 8 à 20% de produits à base de riz soufflé et expansé;
e) 0,5 à 5,0% d'amidons modifiés;
f) 0 à 15% de cacahouètes grillées;
g) 5 à 12% d'humidité.
le procédé consistant à
a) dissoudre le sucre et le sirop de glucose dans l'eau par chauffage,
b) ajouter la matière grasse,
c) préparer une suspension d'amidon modifié en le dispersant dans l'eau et en l'ajoutant au sirop de sucre,
d) chauffer le mélange à une température dans la gamme de 108- à 120°C,
e) refroidir le mélange à une température dans la gamme de 80 à 100°C afin d'obtenir un sirop, ajouter au sirop des céréales traitées sous forme de morceaux,
f) ajouter au sirop des produits à base de riz soufflé et expansé sous forme de morceaux et mélanger complètement durant un temps variant entre 5 et 10 min,
g) mettre de plus le mélange sous forme souhaitée.

3. Procédé conforme à la revendication 2, dans lequel les céréales traitées sont choisies parmi du riz soufflé, du riz expansé ainsi que n'importe quel mélange de ceux-ci, et sont ajoutées sous un rapport de 1/1 en poids/poids.

4. Procédé conforme à la revendication 2, dans lequel les céréales traitées sont moulues et tamisées à une taille de particule, présentant des particules de taille de plus de 30 mesh et de moins de 16 mesh.

5. Procédé conforme à la revendication 2, dans lequel les amidons modifiés visant à conférer une texture souhaitable et sa stabilité sont choisis parmi du maïs cireux et des maltodextrines.

6. Procédé conforme à la revendication 2, dans lequel les amidons modifiés sont dispersés dans le double de leur poids d'eau et incorporés dans le mélange.

7. Procédé conforme à la revendication 2, dans lequel les sucres de jaggery sont utilisés sous forme de solide ou de sirop contenant environ 75% de semi-solides.

8. Procédé conforme à la revendication 2, dans lequel le sirop de glucose utilisé est de qualité de 40 à 42 DE.
